# EUROPEAN PATENT APPLICATION

(11) **EP 1 720 238 A1**
(43) Date of publication of application: **08.11.2006**
(21) Application number: 05710404.4
(22) Date of filing: 18.02.2005
(51) Int. Cl.: H02M 3/155, B62D 5/04

(54) **RELAY ADHESION PREVENTING DEVICE AND MOTOR DRIVE DEVICE**

(30) Priority: 24.02.2004 JP 2004048309
(71) Applicant: DENSO CORPORATION, Kariya-city, Aichi-pref. 448-8661 (JP)
(72) Inventor: ONO, Hiroaki, Kariya-city, Aichi 4488661 (JP)
(74) Representative: Winter, Brandl, Fürniss, Hübner Röss, Kaiser, Polte Partnerschaft Patent- und Rechtsanwaltskanzlei
(86) International application number: PCT/JP2005/002571
(87) International publication number: WO 2005/081386

(57) **Abstract**

In a state where an abnormality of a boosting circuit 53 is detected by monitoring a boosted voltage outputted from the boosting circuit 53, motor relays 55, 56 are turned to an off state when the boosted voltage outputted from the boosting circuit 53 becomes less than a predetermined threshold value due to an action, such as the stopping of a supply of a power source voltage to the boosting circuit 53. Therefore, there can be limited welding of the motor relays 55, 56 caused by an electric arc, which is generated when contacts of the motor relays 55, 56 are separated.

## Description

### Technical Field

The present invention relates to a limiting device for limiting relay welding and a motor driving apparatus.

### Background Art

Because a relay, which is used as a switching means, includes mechanical contacts, an electrical discharge is generated between the mechanical contacts when the relay is turned to an off state from an on state in a state where a large current is supplied to the relay. Then, the relay contacts may be welded due to energy of the electrical discharge, and therefore a circuit, which includes the relay, may be severely affected.

There is disclosed an electromotor driving device, which turns the relay to the off state when a temperature of the relay contacts has become less than a predetermined temperature (threshold value) at a time of turning off the electromotor (motor), in consideration of that the relay contacts are easily welded specially when the large current is supplied in a state where the temperature of the relay contacts is increasing (see Japanese Unexamined Patent Publication No. 2000-115903).

When a voltage of a power source is boosted by using the boosting circuit and is supplied to the electromotor through the relay in an electromotor driving apparatus, a higher voltage, which is higher than a normal boosted voltage, may be outputted from the boosting circuit in a case of the occurrence of an abnormality in the boosting circuit. In this case, when the relay contacts are turned to the off state to stop the power supply to the electromotor, an electric arc may be generated at the time of that the relay contacts are separated because the high voltage is being applied to the relay contacts, and therefore this may lead to the welding of the relay contacts.

When a large current flows through the relay contacts, the temperature of the relay contacts is increased. Therefore, similarly to the conventional apparatus, the welding of the relay might be limited by keeping the relay contacts at the on state depending on the temperature of the relay contacts. However, the large current does not always flow when the high voltage is applied to the relay contacts.

Further, because the temperature of the relay contacts is different depending on usage conditions (is influenced by a surrounding temperature), the threshold value is required to be set comparatively high or to be set particularly for each of the usage conditions in order to exclude the influence by the usage conditions. For example, when the threshold value is set different depending on the usage conditions (places), a product itself is different from others even though its components and its circuit are identical to the others. Thus, a manufacturing management or a product management becomes highly complicated.

### Disclosure of the Invention

It is therefore an object of the present invention to provide a limiting device and a motor driving apparatus, which limit welding of a relay and keep the relay at an off state even in a case where the boosted voltage boosted by a boosting circuit is supplied through the relay.

A limiting device for limiting relay welding according to the present invention includes a power source, a boosting means for boosting a power source voltage of the power source to a predetermined voltage and for outputting the boosted voltage, a relay circuit that switches between a conducting state for conducting the boosted voltage and a non-conducting state for blocking the boosted voltage, an abnormality detecting means for detecting an abnormality of the boosting means through monitoring of the boosted voltage, and a relay controlling means for turning the relay circuit to an off state when the boosted voltage becomes less than a predetermined threshold value in a state where the abnormality of the boosting means is detected.

Because the limiting device for limiting the relay welding according to the present invention is structured as described above, the relay circuit is not immediately turned to the off state when the abnormality of the boosting means is detected, instead, the relay circuit is turned to the off state when the boosted voltage becomes less than the predetermined threshold value. Therefore, the relay circuit is limited from welding caused by the electric arc, which is generated when the contacts of the relay circuit are separated.

Here, the voltage of the boosting means is gradually decreased due to a stop of the boosting operation and the like. Then, when the boosted voltage is decreased to a level, at which there is no possibility of welding of the relay circuit, the relay circuit can be turned to the off state. Therefore, only one threshold value needs to be set, dissimilarly to a method, in which the temperature of the relay contacts is monitored. Therefore, the threshold value does not need to be set different depending on the usage conditions, and thus the manufacturing management or the product management becomes facilitated. Furthermore, because it is not influenced by the surroundings, dissimilarly to a method, in which a decrease of the temperature needs to be waited for, a degree of accuracy in limiting the welding can be improved and a time before the relay circuit is turned off can be shortened.

In the above limiting device for limiting the relay welding, it is preferable to provide a power source relay circuit that is connected between the power source and the boosting means, wherein the power source relay circuit switches between a conducting state for conducting the power source voltage from the power source to the boosting means and a non-conducting state for blocking the power source voltage from the power source to the boosting means, and to provide a power source relay controlling means for turning the power source relay circuit to an off state such that the supply of the power source voltage to the boosting means from the power source is blocked when the abnormality of the boosting circuit is detected by the abnormality detecting means. Therefore, the boosted voltage outputted from the boosting means can be rapidly decreased.

Also, in the above limiting device for limiting the welding, there may be provided a boost stopping means for commanding the boosting means to stop the boosting of the voltage when the abnormality of the boosting circuit is detected by the abnormality detecting means. This is because the decreasing of the boosted voltage may be facilitated in some cases by stopping the boosting operation of the boosting means.

A motor driving apparatus according to the present invention includes a power source, a boosting means for boosting a power source voltage of the power source to a predetermined voltage and for outputting the boosted voltage, a motor, a motor driving means for operating the motor by outputting the boosted voltage to the motor, a relay circuit that is located between the motor and the motor driving means, wherein the relay circuit switches between a conducting state for conducting the boosted voltage to the motor and a non-conducting state for blocking the boosted voltage to the motor, a controlling means for controlling an operation of the motor through the motor driving means, an abnormality detecting means for detecting an abnormality of the boosting means through monitoring of the boosted voltage outputted from the boosting means, and a relay controlling means for turning the relay circuit to an off state when the boosted voltage becomes less than a predetermined threshold value in a state where the abnormality of the boosting means is detected.

Because the motor driving apparatus is structured as above, in addition to similar effects of the above limiting device for limiting the relay welding, the motor can be immediately stopped when the abnormality of the boosting circuit occurs. Therefore, there is achieved an additional effect, in which the motor or a peripheral circuit thereof may not be harmfully effected.

It is preferable that in the above motor driving apparatus the motor provides a steering assist torque to a steering mechanism of the vehicle, and that the controlling means operates the motor based on at least a steering operation of a driver such that a target steering assist torque is generated. There may be a case, in which the motor is abnormally rotated such that an intended steering assist torque intended by the driver is not generated when the abnormality occurs to the boosting circuit in the thus electric power steering system. In order to deal with thus disadvantages, the above motor driving circuit can perform an emergency action, such as immediately stopping the motor when the abnormality of the boosting circuit occurs.

### Brief Description of the Drawings

FIG. 1 is a block diagram showing a general structure of an electric power steering system.
FIG. 2 is a block diagram showing a detailed circuit structure of a motor driver.
FIG. 3 is a circuit diagram showing a detailed circuit structure of a boosting circuit.
FIG. 4 is a flowchart explaining a process for turning a motor relay to an off state when the boosting circuit is at a normal state.
FIG. 5 is a flowchart explaining a process for turning the motor relay to the off state when an abnormality occurs to the boosting circuit.

### Best Modes for Carrying Out the Invention

Hereinafter, a limiting device for limiting relay welding and a motor driving apparatus of the present invention, which are applied for a vehicle electric power steering system, will be described with reference to drawings. It should be noted that a scope of the application of the limiting device for limiting the relay welding of the present invention is not limited to the vehicle electric power steering system.

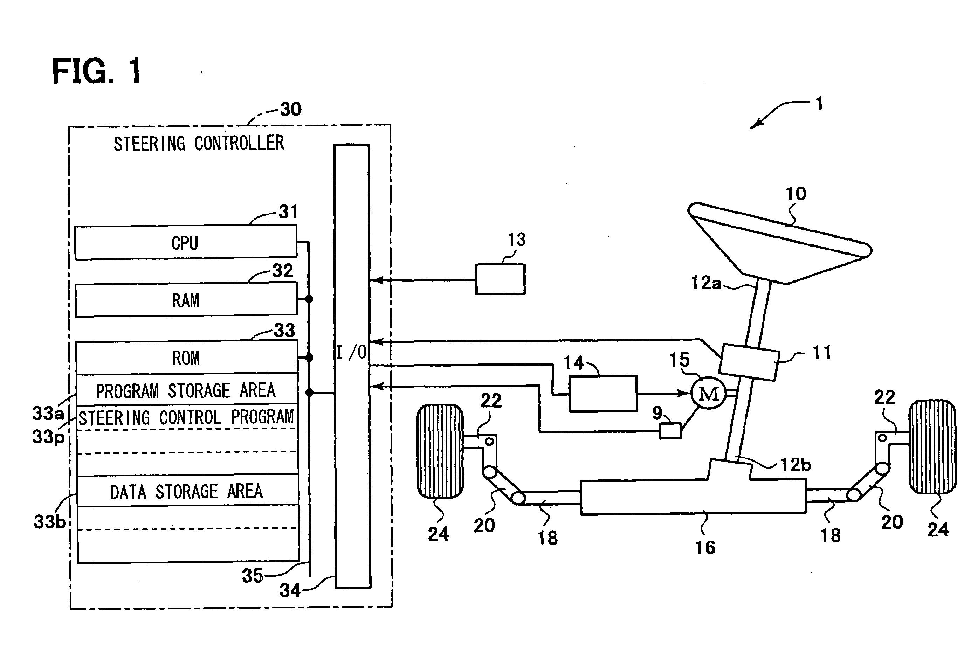

FIG. 1 is a block diagram showing a general structure of an electric power steering system 1. In FIG. 1, a steering shaft 12a is connected to a steering wheel 10, which is steered by a driver. A lower end of the steering shaft 12a is coaxially connected with an upper end of a pinion shaft 12b, and a connecting portion thereof is connected to a torque sensor 11. A pinion (now shown) is provided to a lower end of the pinion shaft 12b, and the pinion is meshed with a rack bar 18 in a steering gear box 16.

Both ends of the rack bar 18 are connected with corresponding ends of tie rods 20, and the other end of each tie rod 20 is connected to a steered wheel 24 through a knuckle arm 22. A motor 15 is provided to the pinion shaft 12b through a gear (not shown) to constitute a so-called column-drive electric power steering system.

However, the system is not limited to the above column-drive electric power steering system. A rack-drive electric power steering system, in which the motor 15 is coaxially provided to the rack bar 18, or a pinion-drive electric power steering system, in which the motor 15 is provided to the steering gear box 16 to rotate the pinion shaft 12b, may be alternatively used.

The torque sensor 11 senses a steering torque, which is applied from the driver to the steering wheel 10, and includes a well-known torque sensing member having a torsion bar and a pair of resolvers, which are set apart in an axial direction of the torsion bar. In other words, the torque sensor 11 senses a torque, which is applied to the steering shaft 12a when the steering wheel 10 is steered by the driver, and outputs torque information to a steering controller 30.

A rotation angle sensor 9 senses a rotation angle of the motor 15 and includes a rotary encoder or a well-known angle-sensing device, such as the resolver. Sensed rotation angle information is transmitted to the steering controller 30. Here, the motor 15 and the pinion shaft 12b are connected by use of a reducer (not shown) that has gears, and the rotation angle sensor 9 can sense a rotational position of the pinion shaft 12b, which is in other words the rotational position of the steering wheel 10, by sensing the rotation angle of the motor 15.

A vehicle speed sensor 13 senses a signal based on a traveling speed of a vehicle and outputs the detected vehicle speed signal to the steering controller 30.

The steering controller 30 (a controlling means in the present invention) includes a well-known CPU 31 (corresponding to a relay controlling means, an abnormality detecting means in the present invention), a RAM 32, a ROM 33, an I/O 34, which is an input and output interface, and a bus line 35, which connects these components. The CPU 31 operates various controls based on programs and data stored in the ROM 33 and the RAM 32. The ROM 33 includes a program storage area 33a and a data storage area 33b. The program storage area 33a stores a steering control program 33p. The data storage area 33b necessary data in the operation of the steering control program 33p.

In the steering controller 30, the CPU 31 executes the steering control program stored in the ROM 33 to compute a steering assist torque to be generated by the motor 15 based on the torque sensed by the torque sensor 11 and the vehicle speed sensed by the vehicle speed sensor 13. The steering controller 30 applies a necessary voltage, which is necessary in generating the computed steering assist torque, to the motor 15 through the motor driver 14. Here, the motor 15 is not limited to any specific motor (e.g., a DC motor, a brushless motor) as long as the motor 15 can be used in the electric power steering system 1.

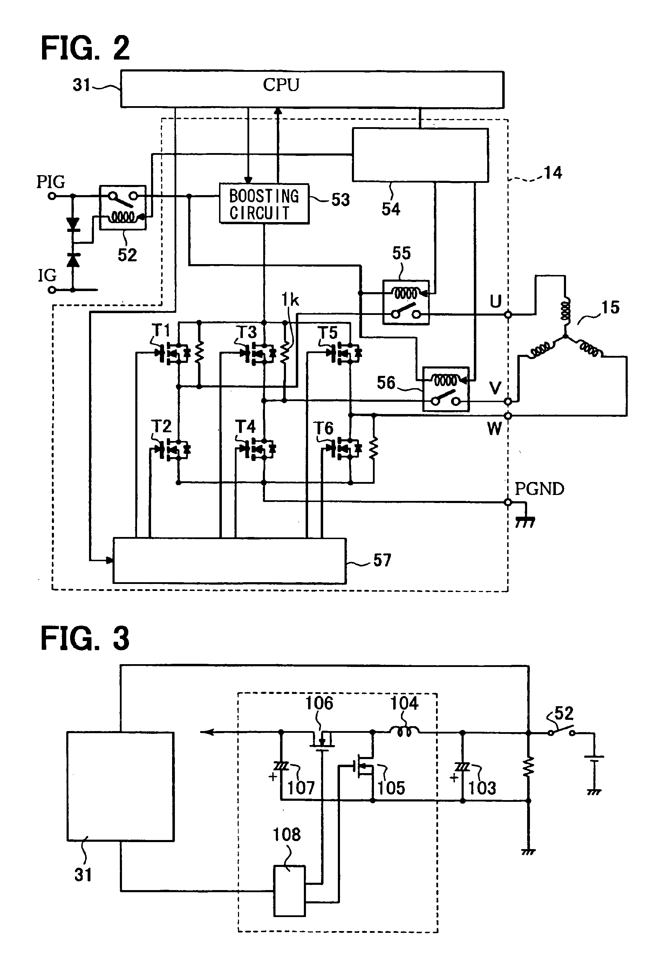

As shown in FIG. 2, the motor driver 14 (corresponding to a motor driving means in the prevent invention) is structured as a well-known three-phase inverter. Switching elements T1 to T6, which corresponds to terminals of coils U, V, W, are wired to constitute a well-known H-bridge circuit such that a flywheel diode is included, the flywheel diode forming a bypass circuit for an induced electric current of the coils U, V, W induced by a switching operation. Then, the motor 15 is driven by executing a pulse width modulation (PWM) control for the switching elements T1 to T6 based on a drive signal outputted by a pre-drive circuit 57, which is operated based on a drive duty signal supplied by the CPU 31.

An input/output control IC 54 (corresponding to the relay controlling means in the present invention), which performs an on/off drive command of a power source relay 52 and motor relays (corresponding to a relay circuit in the present invention) 55, 56 based on a command by the CPU 31, is connected to the CPU 31. Here, a function of the input/output control IC 54 may be included in the CPU 31.

A power source (not shown), such as a battery, is connected with a PIG terminal and an IG terminal, which are connected to an end of the power source relay 52. A boosting circuit 53 is connected between the power source relay 52 and the H-bridge circuit, which includes the switching elements T1 to T6, and boosts the power voltage to a predetermined voltage, which allows the motor 15 to be driven, in the H-bridge circuit. The boosting circuit 53 may be structured, for example, in a way shown in FIG. 3. In other words, the boosting circuit 53 mainly includes a capacitor 103 charged by the power source, which is connected thereto through the power source relay 52, a reactor 104, switching elements 105, 106, which control accumulation and discharge of the energy in the reactor 104, an output capacitor 107, which is charged by the boosted voltage, and a controlling portion 108, which controls the switching elements 105, 106.

In the above described boosting circuit 53, the capacitor 103 is charged with the voltage supplied by the power source, such as the battery, when the controlling portion 108 makes the switching element 105 at the on state and simultaneously makes the switching element 106 at the off state. At the same time, the energy is accumulated in the reactor 104. Then, the accumulated energy in the reactor 104 is discharged when the switching element 105 is turned to the off state and the switching element 106 is turned to the on state. Therefore, the accumulated energy in the reactor 104 is added to the output of the charged power source voltage in the capacitor 103. As a result, the power source voltage is boosted such that the boosted voltage is accumulated in the capacitor 107 and is outputted to the above-described H-bridge circuit.

It is noted that the boosting circuit 53 is not limited to the above-described structure. However, the boosting circuit 53 may be an alternative structure, for example, which uses a voltage amplification circuit.

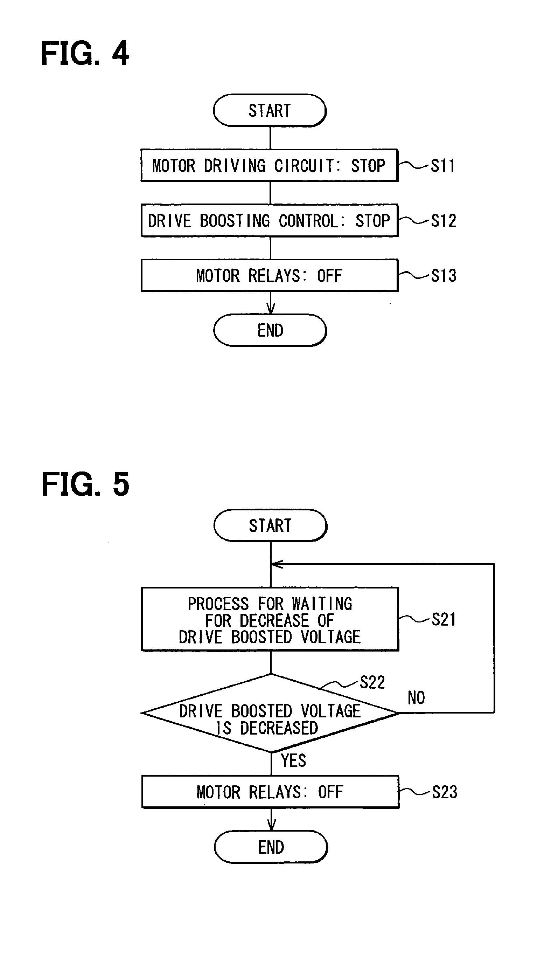

Next, a process for turning the motor relays 55, 56 to the off state while the boosting circuit 53 is at the normal state will be described with reference to a flowchart in FIG. 4. Here, this process is repeatedly executed along with the other processes of the steering control program 33p while the electric power steering system 1 is operated.

Firstly, in order to stop the drive of the H-bridge circuit that includes the switching elements T1 to T6, the CPU 31 outputs a control signal to the pre-drive circuit 57 for stopping the output of the PWM signal (S11). Next, the CPU 31 outputs a control signal to the boosting circuit 53 to stop boosting the power source voltage (S12). That is, the changing of the on and off states of the switching elements 105, 106 are stopped and the switching element 106 is kept at the on state. As a result, the output voltage of the boosting circuit 53 becomes generally equal to the power source voltage. Then, the motor relays 55, 56 are turned to the off state (S13).

Next, a process for turning the motor relays 55, 56 to the off state when an abnormality occurs to the boosting circuit 53 will be described with reference to a flowchart shown in FIG. 5. Here, this process is repeatedly executed along with other processes of the steering control program 33p while the electric power steering system 1 is operated.

The CPU 31 always monitors a state of the output voltage of the boosting circuit 53. The boosting circuit 53 is determined to be abnormal when there has been a state where this output voltage exceeds a normal boosted voltage by a predetermined value (e.g., 5 V), for a predetermined period of time (e.g., 1 second). When the abnormality occurs to the boosting circuit 53, the CPU 31 outputs a control signal to the power source relay 52 such that the supply of the power source voltage (i.e., battery voltage) to the boosting circuit 53 is blocked to stop the boosting of the voltage. At the same time, the CPU 31 waits for the output voltage outputted from the boosting circuit 53 to be decreased to a predetermined value (e.g., voltage value of the power source + 3V) (S21).

It is noted that, in this case, the CPU 31 outputs a control signal also to the boosting circuit 53 for stopping the boosting control. This is because the decreasing of the boosted voltage may be facilitated in some cases by stopping the boosting control of the boosting circuit 53.

In the structure shown in FIG. 3, an electrical charge accumulated in the capacitor 107 is gradually discharged so that the output voltage from the boosting circuit 53 is gradually decreased. Then, the output voltage from the boosting circuit 53 becomes less than a predetermined threshold value, at which there is no possibility of welding of the motor relays 55, 56 (S22; Yes), and the motor relays 55, 56 are turned to the off state (S23).

The above is the description of the embodiment of the present invention, however, the above embodiment is merely an example. That is, the present invention is not limited to the above embodiment, and as long as intention of scope of the patent claims is not deviated, various modifications can be made based on knowledge of the person skilled in the art.

## Claims

1. A limiting device for limiting relay welding, comprising:
a power source;
a boosting means for boosting a power source voltage of the power source to a predetermined voltage and for outputting the boosted voltage;
a relay circuit that switches between a conducting state for conducting the boosted voltage and a non-conducting state for blocking the boosted voltage;
an abnormality detecting means for detecting an abnormality of the boosting means through monitoring of the boosted voltage; and
a relay controlling means for turning the relay circuit to an off state when the boosted voltage becomes less than a predetermined threshold value in a state where the abnormality of the boosting means is detected.

2. The limiting device according to claim 1, further comprising:
a power source relay circuit that is connected between the power source and the boosting means, wherein the power source relay circuit switches between a conducting state for conducting the power source voltage from the power source to the boosting means and a non-conducting state for blocking the power source voltage from the power source to the boosting means; and
a power source relay controlling means for turning the power source relay circuit to an off state such that the supply of the power source voltage to the boosting means from the power source is blocked when the abnormality of the boosting circuit is detected by the abnormality detecting means.

3. The limiting device according to claim 1 or 2, further comprising a boost stopping means for commanding the boosting means to stop the boosting of the voltage when the abnormality of the boosting circuit is detected by the abnormality detecting means.

4. A motor driving apparatus, comprising:
a power source;
a boosting means for boosting a power source voltage of the power source to a predetermined voltage and for outputting the boosted voltage;
a motor;
a motor driving means for operating the motor by outputting the boosted voltage to the motor;
a relay circuit that is located between the motor and the motor driving means, wherein the relay circuit switches between a conducting state for conducting the boosted voltage to the motor and a non-conducting state for blocking the boosted voltage to the motor;
a controlling means for controlling an operation of the motor through the motor driving means;
an abnormality detecting means for detecting an abnormality of the boosting means through monitoring of the boosted voltage outputted from the boosting means; and
a relay controlling means for turning the relay circuit to an off state when the boosted voltage becomes less than a predetermined threshold value in a state where the abnormality of the boosting means is detected.

5. The motor driving apparatus according to claim 4, wherein:
the motor provides a steering assist torque to a steering mechanism of a vehicle; and
the controlling means operates the motor based on at least a steering operation of a driver such that a target steering assist torque is generated.

6. The motor driving apparatus according to claim 4 or 5, further comprising:
a power source relay circuit that is connected between the power source and the boosting means, wherein the power source relay circuit switches between a conducting state for conducting the power source voltage from the power source to the boosting means and a non-conducting state for blocking the power source voltage from the power source to the boosting means; and
a power source relay controlling means for turning the power source relay circuit to an off state such that the supply of the power source voltage to the boosting means from the power source is blocked when the abnormality of the boosting circuit is detected by the abnormality detecting means.

7. The motor driving apparatus according to any one of claims 4 through 6, further comprising a boost stopping means for commanding the boosting means to stop the boosting of the voltage when the abnormality of the boosting circuit is detected by the abnormality detecting means.
